# EUROPEAN PATENT SPECIFICATION

(11) **EP 3 166 237 B1**
(45) Date of publication and mention of the grant of the patent: **04.07.2018**
(21) Application number: 15306749.1
(22) Date of filing: 03.11.2015
(51) Int. Cl.: H04B 10/2581, H04J 14/02, H04J 14/04

(54) **PASSIVE OPTICAL NETWORK HAVING FEW-MODE FIBERS COUPLED TO MODE CONVERTERS**
PASSIVES OPTISCHES NETZWERK MIT AN MODENWANDLERN GEKOPPELTE FEW-MODE-FASERN
RÉSEAU OPTIQUE PASSIF À FIBRES À MOINDRE MODE COUPLÉ À DES CONVERTISSEURS DE MODE

(43) Date of publication of application: 10.05.2017
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: FROC, Gwillerm, 35708 Rennes Cedex 7 (FR)
(74) Representative: Cabinet Plasseraud

(56) References cited:
- EP-A1- 2 725 729
- EP-A1- 2 903 191
- EP-A2- 2 365 654
- CN-A- 103 095 372
- US-A1- 2012 207 470
- ASIF RAMEEZ ET AL: "NG-P0N2 architecture enabled by heterogeneous space division multiplexing with distributed light source: A proof-of-concept evaluation", 2015 INTERNATIONAL CONFERENCE ON PHOTONICS IN SWITCHING (PS), IEEE, 22 September 2015 (2015-09-22), pages 181-183, XP032799052, DOI: 10.1109/PS.2015.7328993 [retrieved on 2015-11-13]

## Description

The present invention is related to optical networks.

Current optical access networks are based either on a Point-to-Point (P2P) mono-colour dual fiber links (one fiber in downstream and another fiber in upstream using both the same wavelength) or a Passive Optical Network (PON) architecture using a unique predetermined wavelength in upstream and another unique predetermined wavelength in downstream in the same fiber.

Next generation optical access networks under specification at ITU-T and IEEE, stack several P2P links or PON trees on different wavelengths on a unique fiber. In this context, distinct predetermined wavelengths (following a standardized grid) would be allocated to the upstream and the downstream for both the PON and the P2P options. The multiple wavelengths stacked PON are usually called TWDM PON.

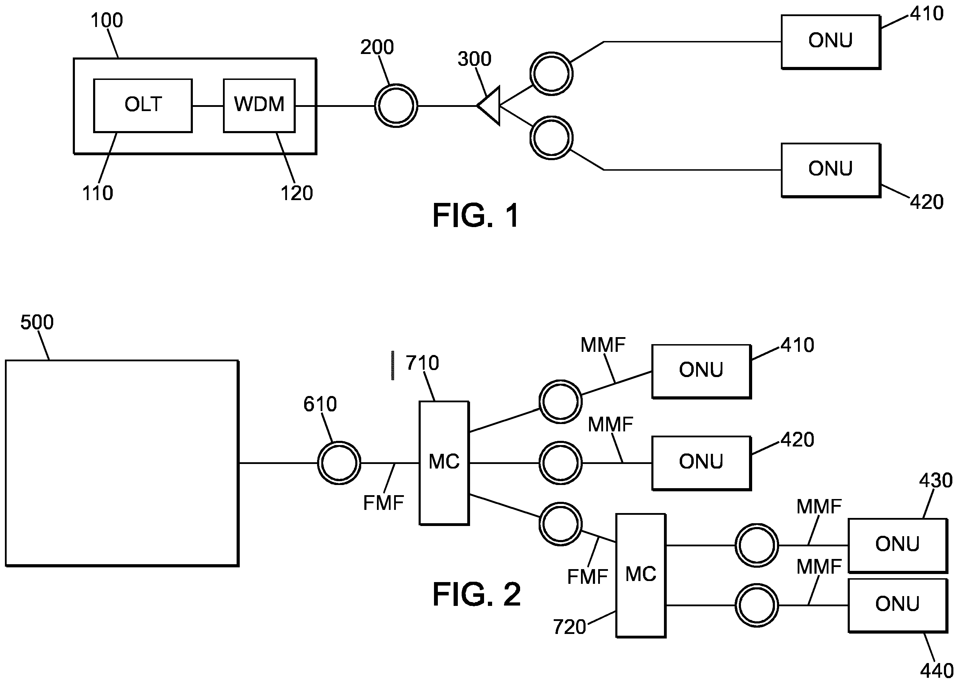

Such a network architecture is illustrated in the appended figure 1 by way of an example. Referring to figure 1, a usual optical network comprises a central office 100, linked by a monomode optical fiber 200, to a wavelength splitter 300 which hence divides into, in the example of figure 1, two monomode optical fibers serving respective two optical network units 410 and 420. The wavelength splitter 300 can be installed anywhere in the field, but usually preferably before a power splitter. The central office 100 further comprises a wavelength multiplexer 120 for performing the TWDM transmission, and a usual emitting (and possibly receiving as well) Optical Line Termination 110 (OLT).

The current standardized options, being TWDM or P2P, should support the presence of power splitter. Because of the important splitting losses, only splitting ratios that do not allow efficient optical access consolidation (optimization of the hardware architecture cost (e.g. CAPEX) and the operative cost (OPEX) as compared to the number of customers) for operators are achieved. Indeed, considering the TWDM option, no more than 512 users per system can be fed, while considering the P2P option, even using high cost DWDM, no more than several hundred or one thousand of users could be reached whereas efficient consolidation would require to address several tens of thousand customers (which is usually the number of homes or facilities covered by a system with a 20km range). In fact, 64 users can be connected per PON, that is to say 256 users with 4 stacked PON. The number of stacked PON may however evolve (e.g. 512 with 8 stacked PON).

Furthermore, in the context of 5G, the matrix of traffic varies along the days and balances from one area (e.g. residential in the evening) to others (e.g. companies during the day). The spectrum and the energy being scarce resources, there is a strong interest in finding methods to optimize dynamically the resource allocation (spectrum, time slots, and energy consumption).

At the same time, in order to keep with low costs, any network component in the field has to remain small and passive. Furthermore, at the Optical Line Termination 110 (OLT) side in the central office 100 (figure 1), the system has to be as much integrated as possible, for example to reduce office size and fanning needs which in turn involve reduced Capex and Opex costs. At last, the optical Networks Units 410, 420 (ONUs) should not be modified in order to assure backward compatibility and to reduce costs.

The present invention aims to improve this situation.

According to an approach of the present invention, it is proposed an enhanced architecture where the trunk fiber is replaced by a few-mode fiber to centralize the connections relative to several PON systems. However, known central offices are not adapted to such functionalities.

The invention aims then at a method for managing a passive optical network, said passive optical network comprising at least one few-mode fiber to centralize connections relative to several optical network units to a central office, wherein said central office is provided with:
- optical line terminations to at least emit multiple bandwidths, and
- at least one mode converter acting as a power splitter to multiplex said multiple bandwidths to different power modes, said different power modes being then provided to said at least one few-mode fiber.

In an embodiment, the aforesaid at least one few-mode fiber is connected to at least one first field mode converter which is connected:
- to at least one optical network unit through a monomode fiber, and
- to at least one second field mode converter through another few-mode fiber.

The aforesaid second field mode converter can be connected further to an optical network unit through a monomode fiber and to a third field mode converter through another few-mode fiber, and so on. That embodiment defines thus a network architecture where the implantation of the invention is advantageous.

In an embodiment, said optical line terminations are arranged to at least emit optical signals each in a predetermined optical wavelength, and the central office is provided further with at least one multiplexer of said optical wavelengths to at least emit said multiple bandwidths.

In this embodiment, said multiplexer is preferably arranged to perform Wavelength Division Multiplexing (WDM).

In an embodiment, the central office can be further provided with a channel engineering block being programmed:
- to interpret coupling losses received at least from said mode converter,
- to optimize transmission parameters based on said coupling losses, and
- to monitor said optical line terminations so as to emit optical signals with respect to said optimized transmission parameters.

In that embodiment, the transmission parameters comprise at least power to launch from said mode converter and wherein said launched power is determined upon figures of merits estimated for:
- a given laser source provided in at least one of said optical line termination,
- a given optical wavelength emitted by said laser source, and
- a given power mode.

In that embodiment, the channel engineering block preferably stores a lookup table giving power to launch based on:
- a given laser source provided in at least one of said optical line termination,
- a given optical wavelength emitted by said laser source, and
- a given power mode.

Preferably, the optical line terminations are arranged to emit and receive optical signals, and wherein said channel engineering block is programmed further to regulate power launched over the passive optical network both in uplink and downlink directions.

The invention aims also at a central office of a passive optical network comprising at least one few-mode fiber to centralize connections relative to several optical network units to said central office. More particularly, the central office comprises optical line terminations and at least one mode converter to implement the method according to the invention.

In an embodiment, the central office comprises further a channel engineering block to implement the method according to the invention.

The invention aims also at a computer program comprising instructions to implement the method when said instructions are run by a processor of the channel engineering block.

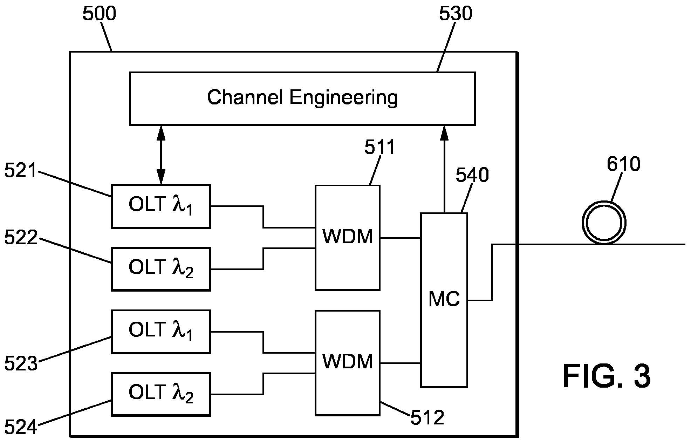

Consequently, the invention proposes an enhanced central office being arranged so as to fully exploit the centralization provided by a few-mode fiber use. To that end, several Optical Line Terminations are provided (references 521 to 524 in figure 3 commented below) and they emit multiple bandwidths according to the Wavelength Division Multiplexing technology and a Mode Converter MC (reference 540 of figure 3) is introduced to multiplex the bandwidths to the different modes. In addition, a channel engineering block (530) optimizes the transmission parameters as a function of the coupling losses in the mode converter.

Other advantages and features will become clear on reading the detailed description of embodiments presented as examples, and on examining the appended drawings in which:
- Figure 1 is a diagram of a conventional passive optical network model,
- Figure 2 is a diagram of an exemplary network system in accordance with the present invention,
- Figure 3 is a diagram of the enhanced central office according to an embodiment of the invention,
- Figure 4 is a chart showing the messages sent and received by the channel engineering box,
- Figure 5 shows an example of steps that can be implemented by a channel engineering block according to the invention,
- Figure 6 shows examples of figures of merit for different fiber modes,
- Figure 7 shows an embodiment of a channel engineering block according to the invention.

Figure 2 presents the architecture according to the invention. The central office 500 is now linked with a few-mode fiber 610 to a mode converter 710.

A few-mode fiber is a type of fiber with a core area large enough to transmit parallel data streams in a few independent spatial modes. Ideally, the capacity of a few-mode fiber increases with the number of modes. Few-mode fiber amplifiers may be required, that have controllable mode-dependent gain to ensure that all transmission channels are optimized, as presented below. Nevertheless, the attenuation of a mode on a few-mode fiber is not higher than the attenuation of the signal in a single fiber at the same wavelength. Thus, the use of amplifiers is not required, when considering a same span. Amplifiers could be used however if the span is increased like optical amplifiers can be used to increase the span in the context of single mode fiber.

Refering again to the example of figure 2, the mode converter 710 is then linked via monomode optical fibers to two optical network units 410 and 420, and to another mode converter 720 via a few-mode fiber. This mode converter is then further linked via monomode optical fibers to two optical network units 430 and 440. The central office emits several modes in the few-mode fiber. The mode converter then divides the modes to adapt to the outcoming fibers and serve the differents optical network units (ONUs). Due to the use of the few-mode fiber, the upstream optical budget is then increased by 3*log2(n) where n is the number of splitter ports (based on mode splitting).

Thus, with the goal of increasing the number of users served by the optical network, the invention proposes to replace the trunk fiber by a few-mode fiber so as to centralize the connections of several passive optical networks ("PONs"). In order to fully exploit this few-mode fiber centralization capability, an enhanced architecture for the central office is proposed. The central office is then composed of the following elements:
- A spatial light modulator, conforming to the new generation standard with both TWDM and WDM option, introduced in order to have the possibility to either send the same information to all the users or to send different data streams to different users;
- A dynamic mode converter, so as to optimize the activation of the passive optical networks;
- A dynamic wavelength multiplexer, so as to associate wavelength corresponding to certain parts of the network to any mode, thus making these wavelength available at any place in the network; and
- A channel engineering block which optimizes the transmit parameters to compensate for the coupling losses and reach the desired performances: indeed, the mode converter introduces a coupling loss which varies with the wavelength and the mode and leads to reduced performances).

Figure 3 presents an example of such an enhanced central office architecture 500. The optical lines terminations 521, 522, 523 and 524 are linked to two wavelength multiplexers 511 and 512. These two multiplexers are then taken as input for a mode converter 540. The optical line terminations and the mode converter can exchange information with a channel engineering block 530. The signals emitted by the optical sources 521, 522, 523, and 524 are multiplexed before being sent into the mode converter. This allows all the wavelength to appear in all the modes. Further, the channel engineering block 530 controls the parameters of the transmission, such that the power is allocated to each wavelength and each mode in order to reach the desired performances. This step is requested to compensate for the fact that the losses in the few-mode fiber are both dependent of the wavelength and the mode.

Based on this architecture, a dynamic activation of the branch of the PON tree can be implemented (for instance for power saving purpose, by switching off the light to be coupled to a given mode). At last allowing any wavelength to be linked to any modes leads to a situation where a given wavelength can be used over all the covered areas (i.e. all over the network). This is of particular interest for broadcasting application, signaling (e.g. wavelength management), or monitoring.

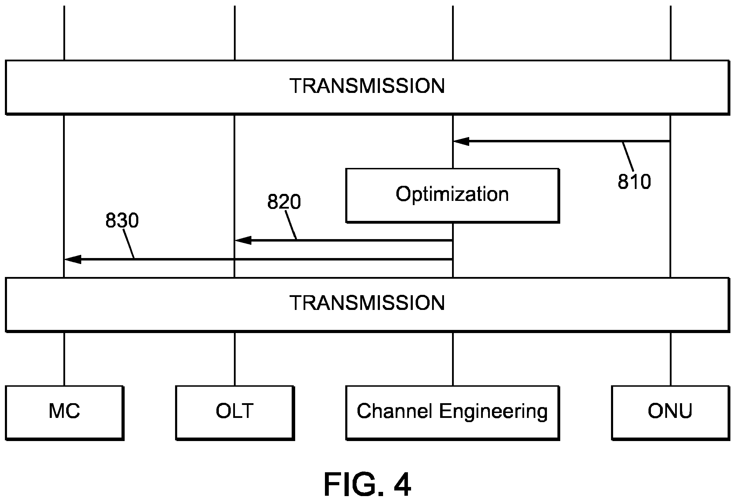

Figure 4 is a diagram of the messages exchanged for the optimization process performed by the channel engineering block. A feedback message 810 (including for example information relative to signal strength) is sent from the optical network units to the channel engineering block where an optimization step is carried out to determine the new transmission parameters. These new transmission parameters are then sent via the signals 820 and 830 to the optical line termination 521-524 and the mode converter 540. An advantage of such an implementation is that it allows a self-adapting optimization, regardless of the figure of merit of the mode converters and wavelength multiplexers.

It should be understood from Figure 3 that the channel engineering block is preferably linked to all sources. It is furthermore possible to provide a control of the channel engineering block over the wavelength multiplexer. Similarly, it is also possible to provide a control of the channel engineering block over the mode converter (the arrow can then be drawn in both ways (double arrow) between boxes 530 and 540).

More details are given below relatively to the channel engineering block 530. It provides an adaptation and/or regulation of the allocated power (called below "launched power") in downlink direction as follows.

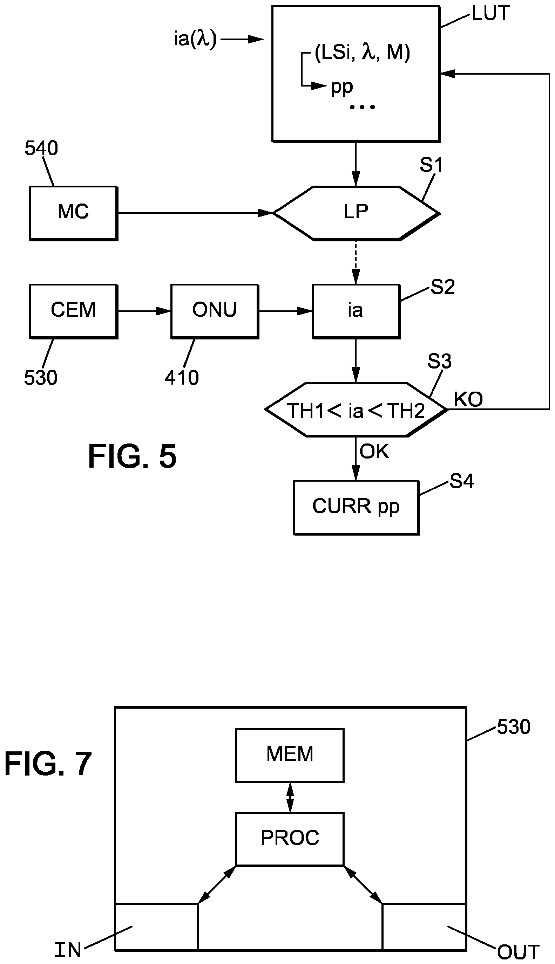

Referring to figure 5, at every instant time, the channel engineering block maintains a look-up table LUT that contains the index of a laser source LSi, the wavelength λ, and the mode in use M, based on a set-up procedure, the proper launched power "pp" is associated with.

Each time the channel engineering block modifies one of the input parameter of the look-up table (source, wavelength, power mode), it changes the launched power of the source accordingly.

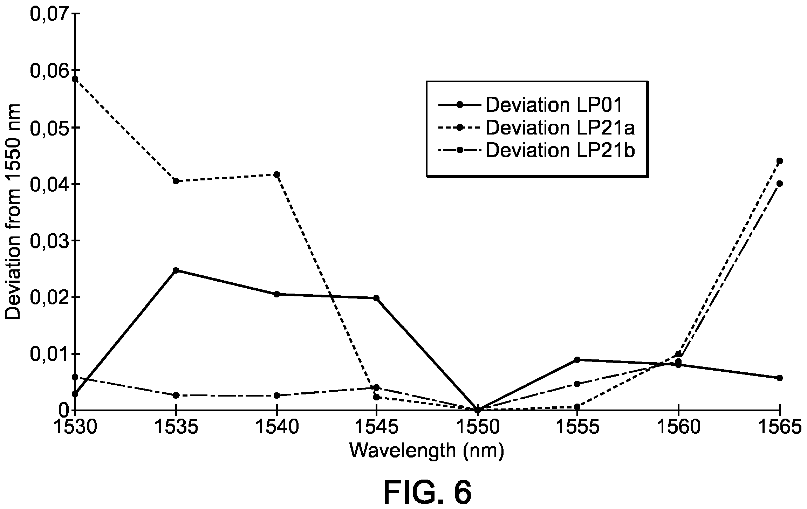

The look-up table can be filled at first on the basis of the figure of merit of attenuation ia(λ) (figure 6, shown around wavelength 1550 nm for different fiber modes). In cooperation with the mode converter 540, a launched power LP that can be reached can therefore be determined in step S1, as indicated in a predetermined specification (multiplication by 1/ia(λ) of the power of the laser source).

Next, as the system is working, the look-up table can be amended using a protocol as follows by way of example: periodically or upon an explicit request from the channel engineering block 530, one or several ONUs send an information *"ia"* related to their received power in step S2 (including for example their Received Signal Strength Indication). Then, the channel engineering block 530 proceeds, in step S3, with said information as follow:
- If ia < threshold-low TH1, then pp is incremented by a delta value given in the look-up table,
- If ia > threshold-high TH2, then pp is decremented by the delta in the look-up table.

Otherwise, the current pp can be maintained in step S4.

Concerning the adaptation of launch power in the uplink direction, the problem can be considered as symmetrical: each ONU holds its own look-up table with same pieces of information but, periodically, or each time an ONU has a request to change its wavelength, or upon a given ONU request, the OLT 110 introduces, in the downlink signal, an information representative of the mode in use and including also possibly a wavelength in use in downlink direction. Then, the ONU establishes a correspondence with that same current mode and with the wavelength in use in the downlink direction, so as to retrieve an *"ia"* for that wavelength, and then translates it for the wavelength to be used in uplink direction, so as to adjust its own pp accordingly.

In an alternative embodiment, the OLT can measure the information *"ia"* related to the received power and more particularly from a given ONU (having a laser source). Then the channel engineering block 530 can proceed with that information as explained above.

Referring now to figure 7, the channel engineering block 530 can comprise for example:
- An input interface IN so as to receive power losses measurement from equipment of the network such as the mode converters 540, 710, 720...,
- A processor PROC for running the instructions of a computer program according to the invention (and the main algorithm of which can be illustrated by figure 5, by way of an example),
- A memory unit MEM comprising a non-transitory computer medium storing instructions of a computer program according to the invention, and comprising further a non-volatile memory to store for example the lookup table LUT, and any other non-transitory data, and possibly also a volatile memory used as a working memory in cooperation with the processor PROC, and
- An output interface OUT to send control signals to OLTs (521-524).

## Claims

1. A method for managing a passive optical network, said passive optical network comprising at least one few-mode fiber (610) to centralize connections relative to several optical network units (410-440) to a central office (500), wherein said central office (500) is provided with:
- optical line terminations (521-524) to at least emit multiple bandwidths (λ₁,λ₂), and
- at least one mode converter (540) acting as a power splitter to multiplex said multiple bandwidths to different power modes, said different power modes being then provided to said at least one few-mode fiber (610),
and wherein said central office (500) comprises further a channel engineering block (530) being programmed for performing the method, the method comprising:
• interpreting coupling losses received at least from said mode converter (540),
• optimizing transmission parameters based on said coupling losses, and
• controlling said optical line terminations (521-524) so as to emit optical signals with respect to said optimized transmission parameters.

2. The method of claim 1, wherein said at least one few-mode fiber (610) is connected to at least one first field mode converter (710) which is connected:
- to at least one optical network unit (410, 420) through a monomode fiber (MMF), and
- to at least one second field mode converter (720) through a few-mode fiber (FMF).

3. The method of anyone of claims 1 and 2, wherein said optical line terminations (521-524) at least emit optical signals each in a predetermined optical wavelength (λ₁,λ₂), and wherein said central office (500) is provided further with at least one multiplexer (511, 512) of said optical wavelengths to at least emit said multiple bandwidths.

4. The method of claim 3, wherein said multiplexer (511, 512) performs Wavelength Division Multiplexing (WDM).

5. The method of anyone of claims 1 to 4, wherein said optimized transmission parameters comprise at least power to launch from said mode converter (540) and wherein said launched power is determined upon figures of merits estimated for:
- a given laser source (LSi) provided in at least one of said optical line termination (521),
- a given optical wavelength emitted by said laser source, and
- a given power mode (M).

6. The method of claim 5, wherein said channel engineering block (530) stores a lookup table giving power to launch based on:
- a given laser source (LSi) provided in at least one of said optical line termination (521),
- a given optical wavelength emitted by said laser source, and
- a given power mode (M).

7. The method of anyone of claims 1 to 6, wherein said optical line terminations (521-524) emit and receive optical signals, and wherein said channel engineering block (530) is programmed further to regulate power launched over the passive optical network both respectively in uplink and downlink directions.

8. A central office (500) of a passive optical network comprising at least one few-mode fiber (610) adapted to centralize connections relative to several optical network units (410-440) to said central office (500), wherein said central office (500) comprises optical line terminations (521-524), at least one mode converter (540) and a channel engineering block (530), the central office, optical line terminations, at least one mode converter and channel engineering block being adapted to implement the method according to anyone of the preceding claims.

9. A computer program comprising instructions to implement the method according to anyone of the precedent claims, when said instructions are run by a processor of said channel engineering block (530).

## Patentansprüche

1. Verfahren zum Verwalten eines passiven optischen Netzwerks, wobei das passive optische Netzwerk mindestens eine Few-Mode-Faser (610) umfasst, um Verbindungen bezüglich mehrerer optischer Netzwerkeinheiten (410-440) zu einer zentralen Stelle (500) zu zentralisieren, wobei die zentrale Stelle (500) ausgestattet ist mit:
- optischen Leitungsabschlüssen (521-524), um mindestens mehrere Bandbreiten (λ₁, λ₂) auszusenden, und
- mindestens einen Modenwandler (540), der als Leistungsteiler dient, um die mehreren Bandbreiten in verschiedene Leistungsmodi zu multiplexen, wobei die verschiedenen Leistungsmodi dann der mindestens einen Few-Mode-Faser (610) zur Verfügung gestellt werden,
und wobei die zentrale Stelle (500) ferner einen Kanal-Engineering-Block (530) umfasst, der zur Durchführung des Verfahrens programmiert ist, wobei das Verfahren umfasst:
• Interpretieren von Kopplungsverlusten, die zumindest von dem Modenwandler (540) empfangen werden,
• Optimieren der Übertragungsparameter auf Grundlage der Kopplungsverluste und
• Steuern der optischen Leitungsabschlüsse (521-524), um optische Signale in Bezug auf die optimierten Übertragungsparameter auszusenden.

2. Verfahren nach Anspruch 1, wobei die mindestens eine Few-Mode-Faser (610) mit mindestens einem ersten Feldmodenwandler (710) verbunden ist, der angeschlossen ist:
- an mindestens eine optische Netzwerkeinheit (410, 420) über eine Mono-Mode-Faser (MMF) und
- an mindestens einen zweiten Feldmodenwandler (720) über eine Few-Mode-Faser (FMF).

3. Verfahren nach einem der Ansprüche 1 und 2, wobei die optischen Leitungsabschlüsse (521-524) mindestens jeweils optische Signale in einer vorbestimmten optischen Wellenlänge (λ₁, λ₂) aussenden und wobei die zentrale Stelle (500) ferner mit mindestens einem Multiplexer (511, 512) der optischen Wellenlängen versehen ist, um mindestens die mehreren Bandbreiten auszusenden.

4. Verfahren nach Anspruch 3, wobei der Multiplexer (511, 512) ein Wellenlängenmultiplexing (WDM) durchführt.

5. Verfahren nach einem der Ansprüche 1 bis 4, wobei die optimierten Übertragungsparameter mindestens die Leistung zum Starten aus dem Modenwandler (540) umfassen und wobei die abgegebene Leistung bestimmt wird auf der Grundlage von geschätzten Leistungswerten für:
- eine gegebene Laserquelle (LSi), die in mindestens einem der optischen Leitungsabschlüsse (521) vorgesehen ist,
- eine gegebene optische Wellenlänge, die von der Laserquelle ausgesendet wird, und
- einen gegebenen Leistungsmodus (M).

6. Verfahren nach Anspruch 5, wobei der Kanal-Engineering-Block (530) eine Referenztabelle speichert, die die Leistung zum Starten angibt, basierend auf:
- einer gegebenen Laserquelle (LSi), die in mindestens einem der optischen Leitungsabschlüsse (521) vorgesehen ist,
- einer gegebenen optischen Wellenlänge, die von der Laserquelle emittiert wird, und
- einem gegebenen Leistungsmodus (M).

7. Verfahren nach einem der Ansprüche 1 bis 6, wobei die optischen Leitungsabschlüsse (521-524) optische Signale aussenden und empfangen und wobei der Kanal-Engineering-Block (530) ferner programmiert ist, um die über das passive optische Netzwerk abgegebene Leistung sowohl in Aufwärts- als auch in Abwärtsrichtung zu regeln.

8. Zentrale Stelle (500) eines passiven optischen Netzwerks mit mindestens einer Few-Mode-Faser (610), die geeignet ist, Verbindungen bezüglich mehrerer optischer Netzwerkeinheiten (410-440) zu der zentralen Stelle (500) zu zentralisieren, wobei die zentrale Stelle (500) optische Leitungsabschlüsse (521-524), mindestens einen Modenwandler (540) und einen Kanal-Engineering-Block (530) umfasst, wobei die zentrale Stelle, die optischen Leitungsabschlüsse, der mindestens eine Modenwandler und der Kanal-Engineering-Block geeignet sind, das Verfahren nach einem der vorangehenden Ansprüche zu implementieren.

9. Computerprogramm, das Anweisungen zur Implementierung des Verfahrens nach einem der vorangehenden Ansprüche umfasst, wenn die Anweisungen von einem Prozessor des Kanal-Engineering-Blocks (530) ausgeführt werden.

## Revendications

1. Procédé de gestion d'un réseau optique passif, ledit réseau optique passif comprenant au moins une fibre à peu de modes (610) pour centraliser des connexions relatives à plusieurs unités de réseau optique (410 à 440) sur un central téléphonique (500), dans lequel ledit central téléphonique (500) est pourvu :
- de terminaisons de ligne optique (521 à 524) pour au moins émettre de multiples bandes passantes (λ₁, λ₂), et
- d'au moins un convertisseur de mode (540) servant de diviseur de puissance pour multiplexer lesdites multiples bandes passantes à des modes de puissance différents, lesdits modes de puissance différents étant alors fournis à ladite au moins une fibre à peu de modes (610),
et dans lequel ledit central téléphonique (500) comprend en outre un bloc d'ingénierie de canal (530) étant programmé pour réaliser le procédé, le procédé comprenant :
• l'interprétation de pertes de couplage reçues au moins en provenance dudit convertisseur de mode (540),
• l'optimisation de paramètres de transmission d'après lesdites pertes de couplage, et
• la commande desdites terminaisons de ligne optique (521 à 524) de façon à émettre des signaux optiques en rapport avec lesdits paramètres de transmission optimisés.

2. Procédé selon la revendication 1, dans lequel ladite au moins une fibre à peu de modes (610) est connectée à au moins un premier convertisseur de mode de champ (710) qui est connecté :
- à au moins une unité de réseau optique (410, 420) par l'intermédiaire d'une fibre monomode (MMF), et
- à au moins un second convertisseur de mode de champ (720) par l'intermédiaire d'une fibre à peu de modes (FMF).

3. Procédé selon l'une quelconque des revendications 1 et 2, dans lequel lesdites terminaisons de ligne optique (521 à 524) émettent au moins des signaux optiques chacun dans une longueur d'onde optique (λ₁, λ₂) prédéterminée, et dans lequel ledit central téléphonique (500) est en outre pourvu d'au moins un multiplexeur (511, 512) desdites longueurs d'onde optiques pour au moins émettre lesdites multiples bandes passantes.

4. Procédé selon la revendication 3, dans lequel ledit multiplexeur (511, 512) réalise un multiplexage par répartition en longueur d'onde (WDM).

5. Procédé selon l'une quelconque des revendications 1 à 4, dans lequel lesdits paramètres de transmission optimisés comprennent au moins une puissance d'injection dudit convertisseur de mode (540) et dans lequel ladite puissance injectée est déterminée d'après des facteurs de mérite estimés pour :
- une source laser donnée (LSi) fournie dans au moins l'une desdites terminaisons de ligne optique (521),
- une longueur d'onde optique donnée émise par ladite source laser, et
- un mode de puissance (M) donné.

6. Procédé selon la revendication 5, dans lequel ledit bloc d'ingénierie de canal (530) stocke une table de consultation donnant une puissance d'injection d'après :
- une source laser donnée (LSi) fournie dans au moins l'une desdites terminaisons de ligne optique (521),
- une longueur d'onde optique donnée émise par ladite source laser, et
- un mode de puissance (M) donné.

7. Procédé selon l'une quelconque des revendications 1 à 6, dans lequel lesdites terminaisons de ligne optique (521 à 524) émettent et reçoivent des signaux optiques, et dans lequel ledit bloc d'ingénierie de canal (530) est en outre programmé pour réguler la puissance injectée sur le réseau optique passif à la fois respectivement dans des directions de liaison montante et de liaison descendante.

8. Central téléphonique (500) d'un réseau optique passif comprenant au moins une fibre à peu de modes (610) adaptée pour centraliser des connexions relatives à plusieurs unités de réseau optique (410 à 440) sur ledit central téléphonique (500), dans lequel ledit central téléphonique (500) comprend des terminaisons de ligne optique (521 à 524), au moins un convertisseur de mode (540) et un bloc d'ingénierie de canal (530), le central téléphonique, les terminaisons de ligne optique, au moins un convertisseur de mode et le bloc d'ingénierie de canal étant adaptés pour implémenter le procédé selon l'une quelconque des revendications précédentes.

9. Programme d'ordinateur comprenant des instructions pour implémenter le procédé selon l'une quelconque des revendications précédentes, dans lequel lesdites instructions sont exécutées par un processeur dudit bloc d'ingénierie de canal (530).
